# EUROPÄISCHE PATENTSCHRIFT

(11) **EP 1 763 443 B1**
(45) Veröffentlichungstag und Bekanntmachung des Hinweises auf die Patenterteilung: **15.04.2009**
(21) Anmeldenummer: 05769204.8
(22) Anmeldetag: 01.07.2005
(51) Int. Cl.: B60G 15/14, F16F 9/084

(54) **LUFTFEDER-SCHWINGUNGSDÄMPFERBAUEINHEIT**
PNEUMATIC SPRING-VIBRATION DAMPER UNIT
MODULE AMORTISSEUR PNEUMATIQUE

(30) Priorität: 02.07.2004 DE 102004032411
(43) Veröffentlichungstag der Anmeldung: 21.03.2007
(73) Patentinhaber: ZF Friedrichshafen AG, 88038 Friedrichshafen (DE)
(72) Erfinder: BRUNNEKE, Hans-Gerd, 49074 Osnabrück (DE); LÖSCHE, Christian, 32351 Stemwede (DE)
(86) Internationale Anmeldenummer: PCT/DE2005/001159
(87) Internationale Veröffentlichungsnummer: WO 2006/005299

(56) Entgegenhaltungen:
- DE-A1- 19 959 839
- US-A- 3 638 769
- US-A- 4 325 541

## Beschreibung

Die Erfindung betrifft eine Luftfeder-Schwingungsdämpferbaueinheit nach dem Oberbegriff des Patentanspruches 1.

Eine derartige Baueinheit ist beispielsweise aus der DE 199 59 839 A1 bekannt. Dort ist eine Luftfeder kombiniert mit einem Schwingungsdämpfersystem beschrieben, bei der das zum Schwingungsdämpfersystem gehörende Zylinderrohr, in welchem der an eine Kolbenstange angeschlossene Kolben beweglich aufgenommen ist, mittels einer speziellen Dichtung gegen den Luftraum der Luftfeder abgedichtet ist, wobei die spezielle elastische Art der Abdichtung, geringe Bewegungen des Zylinderrohres abweichend von der üblichen Mittelsenkrechten gestattet.

Als nachteilig hat sich bei den bestehenden Konstruktionen erwiesen, dass die die karosserieseitige Baugruppe mit der fahrwerkseitigen Baugruppe verbindende Kolbenstange unter normalen Betriebsbedingungen auf Grund eventuell auftretender Versetzungen zwischen den angesprochenen Baugruppen oftmals Biegebeanspruchungen ausgesetzt ist, die auf Grund des an die Kolbenstange angeschlossenen Kolbens zu einer erhöhten Reibung im Zylinderrohr des Schwingungsdämpfersystems und daraus resultierend zu einem schlechteren Ansprechverhalten des Schwingungsdämpfersystems führen.

Darüber hinaus sind im Stand der Technik konstruktive Lösungen bekannt, bei denen insbesondere bei hohen Federbeanspruchungen, bei denen der Luftraum der Luftfeder derart weit zusammengepresst wird, dass ein vorhandener fahrwerkseitiger Anschlag der Luftfeder an der gegenüber liegenden karosserieseitigen Baugruppe zur Anlage kommt, eine außen am Zylinderrohr des Schwingungsdämpfersystems angeordnete Lagerung des Zylinderrohres außerordentlich hohen Kräften ausgesetzt ist. Dies führt im Rahmen der üblichen Betriebssituationen in der Regel vorzeitig zu einer Beeinträchtigung bzw. zu einem Ausfall der aus dem Stand der Technik bekannten Luftfeder-Schwingungsdämpferbaueinheiten.

Ausgehend von diesen aus dem Stand der Technik bekannten Nachteilen ist es die Aufgabe der Erfindung, eine gattungsgemäße Luftfeder-Schwingungsdämpferbaueinheit so weiter zu entwickeln, dass auf Grund verbesserter Kraftübertragung innerhalb der Baueinheit die Lebensdauer derartiger Vorrichtungen signifikant erhöht werden kann.

Diese Aufgabe wird in Zusammenschau mit den gattungsbildenden Merkmalen durch die im kennzeichnenden Teil des Anspruches 1 offenbarten technischen Merkmale gelöst.

Erfindungswesentlich dabei ist es, dass die Kolbenstange innerhalb des Zylinderrohres des Schwingungsdämpfersystems längs verschieblich mittels einer Schwenklageranordnung geführt ist, welche Winkelausschläge der Kolbenstangenlängsachse zur Mittellängsachse des Zylinderrohres ermöglicht, und dass zwischen Kolbenstange und Kolben ein Verbindungselement angeordnet ist, welches an Kolbenstange und Kolben mittels jeweils eines Kugelgelenkes festgelegt ist.

Die Verbindung von Schwenklageranordnung und dem zwischen Kolbenstange und Kolben vorhandenen Verbindungselement ermöglichen es, dass die Kolbenstange in Folge von Verlagerungen der fahrwerkseitigen Baugruppe, an welcher die Kolbenstange festgelegt ist, diesen Verlagerungen folgen kann, ohne auf Biegung beansprucht zu werden. Vielmehr führt die Verlagerung der fahrwerkseitigen Baugruppe zu einem Winkelausschlag der Kolbenstangenlängsachse in Relation zur Mittellängsachse des Zylinderrohres. Durch die erfindungsgemäße Gestaltung lässt sich jedoch der an die Kolbenstange angeschlossene Kolben weiterhin leichtgängig innerhalb des Kolbens bewegen, so dass ein schnelles Ansprechverhalten des Schwingungsdämpfersystems gewährleistet ist.

Darüber hinaus werden durch die erfindungsgemäße Konstruktion bei einem Endanschlag der fahrwerkseitigen Baugruppe an der karosserieseitigen Baugruppe in Folge eines starken Zusammenpressens des zwischen den Baugruppen befindlichen durch den Rollbalg begrenzten Luftvolumens innerhalb der Luftkammer die vom Fahrwerk in die Luftkammer-Schwingungsdämpferbaueinheit eingeleiteten Kräfte direkt übertragen, ohne dass die erfindungsgemäße Lagerung der Kolbenstange davon betroffen ist. Diese Tatsache ergibt sich durch die gegenüber dem Stand der Technik geänderte Lage der Schwenklageranordnung im Innern des zum Schwingungsdämpfersystem gehörenden Zylinderrohres.

Weitere spezielle Ausgestaltungen des Gegenstandes der Erfindung ergeben sich aus den Merkmalen der Unteransprüche.

Es hat sich als spezielle Ausgestaltungsvariante der Schwenklageranordnung insbesondere als vorteilhaft erwiesen, dass diese ein mit einer dem Kolbenstangenquerschnitt angepassten Durchgangsausnehmung versehenes Lagerinnenteil mit runder, im Querschnitt variierender Außenkontur in Form einer konvexen Außengestalt aufweist, welches von einem Lageraußenteil mit an die Außenkontur des Lagerinnenteils angepasster korrespondierender konkaver Innenausdehnung umschlossen ist. Diese spezielle Schwenklageranordnung, ähnlich eines Kugelhülsengelenkes, gewährleistet die leichte Verschwenkung der Kolbenstange aus der üblichen Mittellängsachse des Zylinderrohres, wobei gleichzeitig eine leichte Verschieblichkeit der Kolbenstange gewährleistet ist. Darüber hinaus kann es vorteilhaft sein, zur zusätzlichen Herabsetzung von Reibungsverlusten das Lagerinnenteil der Schwenklageranordnung aus Kunststoff zu fertigen.

In der Durchgangsausnehmung des Lagerinnenteils zur Führung der Kolbenstange sind entsprechend einer weiteren zweckmäßigen Ausgestaltung ein oder mehrere Dichtungselemente angeordnet, welche eine Trennung der vom Rollbalg gebildeten Luftkammer vom Innenraum des Zylinderrohres gewährleisten. Diese Dichtungselemente lassen sich vorteilhafterweise als elastische Dichtungsringe ausbilden, welche in zwei umlaufenden, nutenförmigen Vertiefungen an der inneren Führungsfläche der Durchgangsausnehmung angeordnet sind.

Zusätzlich ist entsprechend einer vorteilhaften Weiterbildung zwischen Lagerinnenteil und Lageraußenteil der Schwenklageranordnung mindestens ein Dichtungselement angeordnet, welches ebenfalls als elastischer Dichtungsring ausgebildet sein kann, der in einer umlaufenden Nut der inneren Führungsfläche der konkaven Innenausnehmung des Lageraußenteils angeordnet ist.

Als zusätzliches Dichtungselement lässt sich darüber hinaus an dem der Luftkammer zugewandten Ende des Zylinderrohres des Schwingungsdämpfersystems die Durchgreiföffnung für die Kolbenstange mit einem Dichtungselement mit elastischen Dichtlippen versehen, wobei die elastischen Dichtlippen als umlaufende Anlageelemente an die Kolbenstangenoberfläche der Schwenkbewegung der Kolbenstange aus der Mittellängsachse des Zylinderrohres folgen können. Auf diese Weise wird das Zylinderrohr selbst bei größeren Verschwenkungen der Kolbenstange zuverlässig gegen die Luftkammer der Luftfeder-Schwingungsdämpferbaueinheit abgedichtet.

Entsprechend einer weiteren zweckmäßigen Ausgestaltung des Gegenstandes der Erfindung kann die Kolbenstange an der zweiten fahrwerkseitigen Baugruppe in einer weiteren Schwenklageranordnung aufgenommen sein, welche kleine Winkelabweichungen der Kolbenstangenmittelachse senkrecht zur Befestigungsebene der fahrwerkseitigen Baugruppe ermöglicht.

Unter konstruktiven sowie unter wirtschaftlichen Gesichtspunkten hat sich dabei als Schwenklageranordnung die Verwendung eines Kugelhülsengelenkes als vorteilhaft gezeigt.

Um den Schwenkwinkel der Kolbenstange in einer Bewegungsebene weiter zu vergrößern, kann es entsprechend einer weiteren besonderen Gestaltung vorteilhaft sein, das Schwingungsdämpfersystem mit seinen wesentlichen Bauelementen Zylinderrohr, Kolben und Schwenklageranordnung für die Kolbenstange mit ovalem Querschnitt auszubilden.

Die größte Schwenkebene der Kolbenstange liegt in diesem Fall in der Querschnittsebene mit der größten Querschnittsausdehnung des ovalen bzw. ellipsenförmigen Zylinderrohres.

Im Folgenden werden zwei Ausführungsbeispiele des Gegenstandes der Erfindung unter Zuhilfenahme zweier Abbildungen näher beschrieben.

Es zeigt:
- Figur 1: eine Schnittdarstellung durch eine erfindungsgemäße Luftfeder- Schwingungsdämpferbaueinheit in Neutralstellung
- Figur 2: eine perspektivische Teilschnittdarstellung der Luftfeder- Schwingungsdämpferbaueinheit der Figur 1 in verschwenktem Zustand der Kolbenstange und in Anschlagstellung der fahrwerkseitigen Baugruppe an der karosserieseitigen Baugruppe
- Figur 3: eine Schnittbilddarstellung einer weiteren Ausführungsvariante der erfindungsgemäßen Luftfeder-Schwingungsdämpferbaueinheit in Neutralstellung und
- Figur 4: eine perspektivische Teilschnittdarstellung der Luftfederschwingungsdämpferbaueinheit der Figur 3 in verschwenktem Zustand der Kolbenstange und in Anschlagstellung der fahrwerkseitigen Baugruppe an der karosserieseitigen Baugruppe.

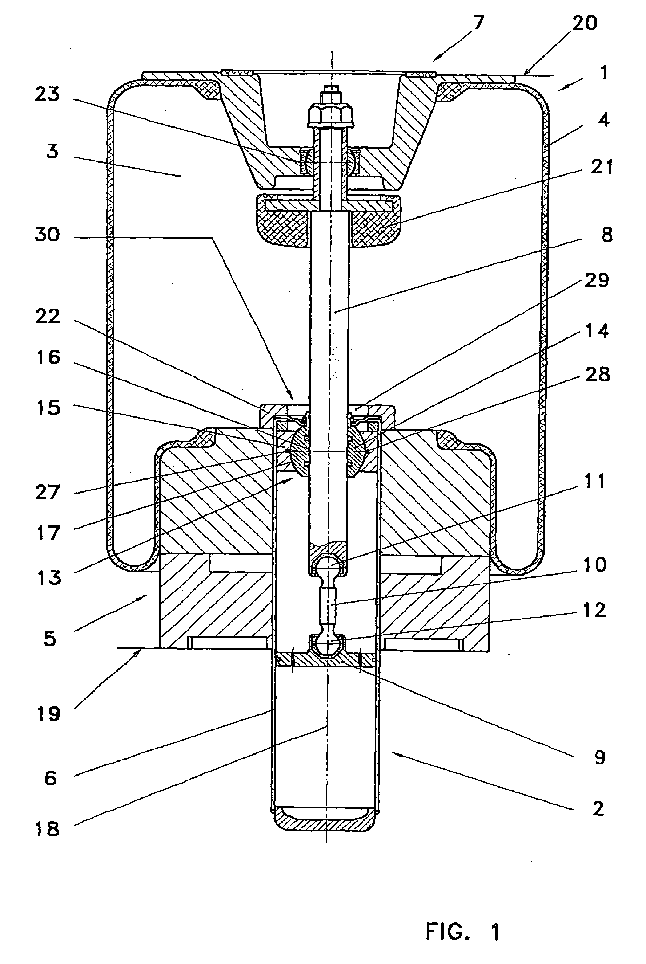

Die Figur 1 zeigt eine Luftfeder 1 als Baueinheit zusammen mit einem Schwingungsdämpfersystem 2. Die Luftfeder 1 besteht im Wesentlichen aus zwei gegeneinander bewegbaren Baugruppen, wobei die erste Baugruppe 5 karosserieseitig am Kraftfahrzeug festgelegt ist und ein Zylinderrohr 6 des Schwingungsdämpfersystems 2 aufnimmt und einer fahrwerkseitigen Baugruppe 7, die beispielsweise an einer Radaufhängung eines Kraftfahrzeuges festgelegt ist. Ein die beiden vorgenannten Baugruppen 5 und 7 miteinander dicht verbindender Rollbalg 4 lässt zwischen den Bauteilen eine volumenvariable Luftkammer 3 entstehen. Diese Luftkammer ist mit Druckluft gefüllt, welche das Federungsmedium der Luftfeder bildet. Die karosserieseitige Baugruppe 5 und die fahrwerkseitige Baugruppe 7 werden entsprechend der Figur 1 durch eine Kolbenstange 8 verbunden, die an ihrem unteren karosserieseitigen Ende mit einem Kolben 9 versehen ist, welcher in üblicher Weise innerhalb des Zylinderrohres 6 des Schwingungsdämpfersystems 2 translatorisch verschieblich gelagert ist. Zwischen dem Ende der Kolbenstange 8 und dem Kolben 9 befindet sich als ein erfindungswesentliches Merkmal der Luftfeder-Schwingungsdämpferbaueinheit ein Verbindungselement 10, welches an seinen beiden Enden jeweils ein Kugelgelenk 11 und ein Kugelgelenk 12 zur Anbindung an die Kolbenstange 8 bzw. den Kolben 9 aufweist.

Im oberen Bereich des Zylinderrohres 6, d.h. der fahrwerkseitigen Baugruppe 7 zugewandt, befindet sich eine Schwenklageranordnung 13 , durch welche die Kolbenstange 8 innerhalb des Zylinderrohres 6 bzw. innerhalb der karosserieseitigen Baugruppe 5 geführt ist. Die Schwenklageranordnung 13 besteht im Wesentlichen aus einem Lagerinnenteil 14 mit einer Durchgangsausnehmung 16, die in ihrem Querschnitt dem Kolbenstangenquerschnitt angepasst ist. Die Außenkontur des Lagerinnenteils 14 ist im Querschnitt kreisförmig ausgebildet, wobei die Querschnitte in Axiallängsrichtung der Kolbenstange 8 so variieren, dass sich die Form einer konvexen Außengestalt ergibt. Die Außenkontur des Lagerinnenteils 14 ist von einem Lageraußenteil 15 umgeben, welches eine an die Außenkontur des Lagerinnenteils 14 angepasste korrespondierende konkave Innenausnehmung 17 aufweist.

Die Gestaltung von Lagerinnenteil 14 und Lageraußenteil 15 ähnelt einem Kugelhülsengelenk und ermöglicht es in Kombination mit dem Verbindungselement 10 der Kolbenstange 8, Winkelausschläge zur Mittellängsachse 18 des Zylinderrohres 6 auszuführen. Diese Winkelauslenkung wird in üblichen Betriebszuständen der Luftfeder-Schwingungsdämpferbaueinheit immer dann herbeigeführt, wenn die üblicherweise übereinander in Deckung liegenden Befestigungsebene 19 der karosserieseitigen Baugruppe 5 und die Befestigungsebene 20 der fahrwerkseitigen Baugruppe 7 sich gegeneinander verlagern. Dies kann durch eine Parallelverschiebung der Befestigungsebene 19 und 20 geschehen oder durch eine Kippbewegung zueinander.

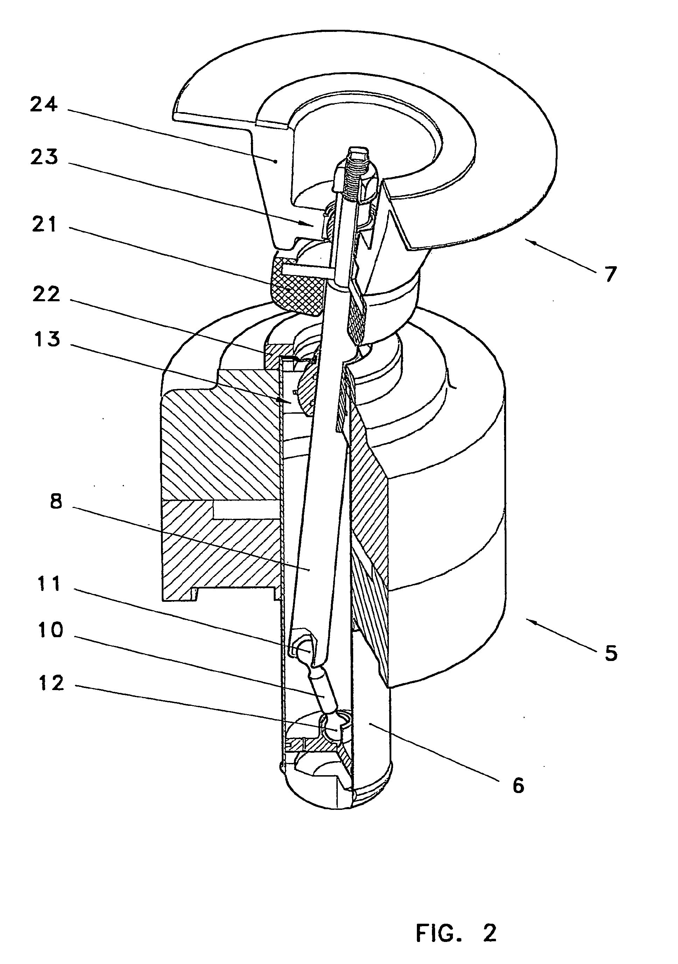

In der Figur 2 ist eine derartige Kippbewegung dargestellt, wobei zur besseren Veranschaulichung der innenliegenden Bauteile der Luftfeder-Schwingungsdämpferbaueinheit auf die Darstellung des Rollbalges 4 verzichtet worden ist. Darüber hinaus ist in der Figur 2 eine Betriebssituation dargestellt, in der die als Federelement wirkende Luftkammer 3 so weit zusammengepresst ist, dass ein an der Unterseite der fahrwerkseitigen Baugruppe 7 vorhandenes Anschlagelement 21 an einer an der Oberseite der karosserieseitigen Baugruppe 5 vorhandenen Anschlagplatte 22 zur Anlage kommt. Die von der fahrwerkseitigen Baugruppe 7 über das vorteilhafterweise aus elastischem Material gefertigte Anschlagelement 21 übertragenen Fahrwerkskräfte werden dabei direkt über die Anschlagplatte 22 in die karosserieseitige Baugruppe 5 eingeleitet. Eine Beanspruchung der Schwenklageranordnung ist damit ausgeschlossen.

Um größere Kippbewegungen der fahrwerkseitigen Baugruppe 7 bzw. deren Befestigungsebene auch gegenüber der Kolbenstange 8 zu ermöglichen, ist entsprechend einer vorteilhaften Weiterbildung des Erfindungsgedankens den Figuren 1 und 2 zusätzlich zu entnehmen, dass die Kolbenstange 8 in ihrem oberen Befestigungsbereich an der fahrwerkseitigen Baugruppe 7 in einer zusätzlichen Schwenklageranordnung 23 aufgenommen ist. Die Schwenklageranordnung 23 ist im dargestellten Ausführungsbeispiel als Kugelhülsengelenk ausgebildet und ermöglicht eine zusätzliche Kippbewegung eines zur fahrwerkseitigen Baugruppe 7 gehörenden Befestigungselementes 24 relativ zur Kolbenstange 8. Natürlich sind auch andere Schwenklageranordnungen denkbar.

Der Figur 2 ist ergänzend die maximale Winkelauslenkung der Kolbenstange 8 relativ zur Mittellängsachse des Zylinderrohres 6 zu entnehmen. Das Verbindungselement 10 ermöglicht hierbei, wie dies anschaulich der Figur 2 zu entnehmen ist, auf Grund der Kugelgelenke 11 und 12 eine problemlose Verbindung der Kolbenstange 8 zum Kolben 9.

Der Darstellung - insbesondere der Figur 1 - im Bereich der Schwenklageranordnung 13 zeigt darüber hinaus, dass sich in der Durchgangsausnehmung 16 des Lagerinnenteiles 14 zwei umlaufende nutenförmige Vertiefungen befinden, in der jeweils ein ringsförmiges Dichtungselement, beispielsweise in Form eines elastischen O-Ringes angeordnet ist. Die in den Nuten befindlichen Dichtungselemente dienen der Abdichtung des Spaltes zwischen Schwenklageranordnung 13 und Kolbenstange 8.

Darüber hinaus ist der Spalt zwischen Lagerinnenteil 14 und Lageraußenteil 15 mittels eines Dichtungselementes 27 gegen die Luftkammer 3 der Luftfeder-Schwingungsdämpferbaueinheit abgedichtet. Das Dichtungselement 27 ist analog den vorher besprochenen Dichtungselementen in einer Nut 28 angeordnet, die umlaufend an der inneren Führungsfläche der konkaven Innenausnehmung 17 des Lageraußenteils 15 befindlich ist.

Darüber hinaus ist die Luftkammer 3 gegenüber der Schwenklageranordnung 13 im Bereich der Durchgreiföffnung 29 an der Oberseite des Zylinderrohres 6 mittels eines weiteren Dichtungselementes 30 abgeschottet. Das Dichtungselement 30 weist dabei elastische Dichtlippen auf, die als umlaufende Anlageelemente an die Kolbenstangenoberfläche der möglichen Schwenkbewegung der Kolbenstange 8 aus der Mittellängsachse 18 des Zylinderrohres 6 folgen können.

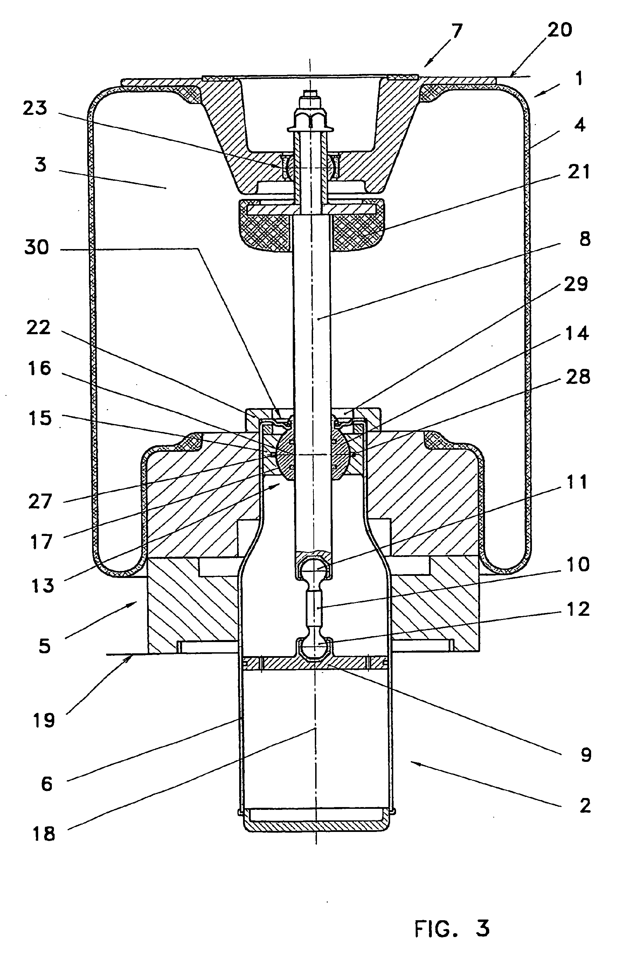

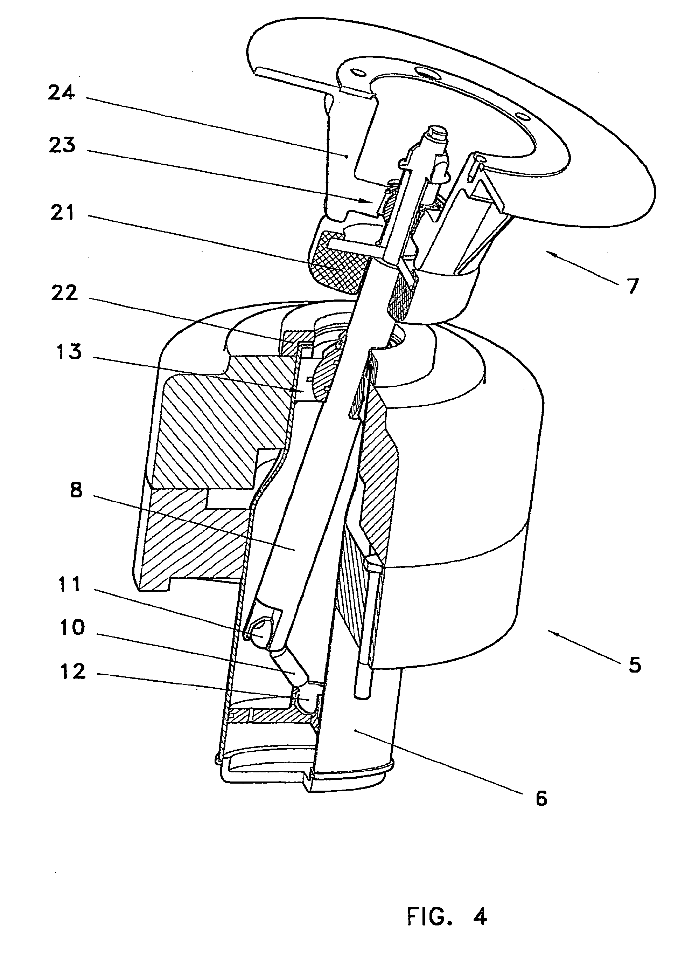

Die Darstellung der Figuren 3 und 4 stellt eine weitere Ausgestaltungsvariante des Gegenstandes der Erfindung dar, die in wesentlichen Elementen der karosserieseitigen Baugruppe 5 sowie der fahrwerkseitigen Baugruppe 7 dem oben beschriebenen ersten Ausführungsbeispiel entspricht. Es wird deshalb an dieser Stelle darauf verzichtet, noch einmal im Einzelnen auf die übereinstimmenden Bauelemente beider Varianten einzugehen. Die in den Figuren 3 und 4 verwendeten Bezugsziffern entsprechen denjenigen der anhand der Figuren 1 und 2 beschriebenen Bauelemente der erfindungsgemäßen Luftfeder-Schwingungsdämpferbaueinheit.

Wesentlicher Unterschied der in den Figuren 3 und 4 dargestellten Ausführungsvariante bildet die Tatsache, dass die wesentlichen Elemente des Schwingungsdämpfersystem, nämlich das Zylinderrohr 6, der Kolben 9 sowie die Schwenklageranordnung 13 im Querschnitt nicht rund, sondern oval bzw. ellipsenförmig ausgestaltet sind. Durch die neuartige Querschnittsgestaltung wird die Schwenkbewegung der Kolbenstange 8 in einer Ebene gegenüber einer runden Querschnittsgestaltung des Zylinderrohres 6 und des Kolbens 9 zusätzlich vergrößert. Diese Schwenkebene liegt im Bereich der größten Querschnittsausdehnung des elliptischen bzw. ovalen Querschnitts des Zylinderrohres.

Der Darstellung der Figur 3 ist dabei zu entnehmen, dass sich die Querschnittsabmaße des Zylinderrohres 6 zusammen mit dem darin befindlichen Kolben 9 im unteren Bereich der karosserieseitigen Baugruppe 5 zusätzlich erweitern. Dieses bildet eine nochmalige Vergrößerung des Schwenkbereiches der Kolbenstange 8.

In der Darstellung der Figur 4 ist die Kolbenstange zusammen mit der fahrwerkseitigen Baugruppe in ihrer maximalen Auslenkbewegung innerhalb der oben angesprochenen Schwenkebene im Bereich der größten Querschnittsausdehnung des nunmehr oval ausgebildeten Zylinderrohres dargestellt. Die übrige Ausgestaltung des Ausführungsbeispieles der Figur 4 entspricht im Wesentlichen der bereits in Figur 2 dargestellten Ausführungsvariante, so dass an dieser Stelle auf eine weitere detaillierte Erläuterung verzichtet wird.

Die beschriebene erfindungsgemäße Gestaltung inklusive der weiterführenden speziellen Ausführungsmerkmale bietet in ihrer Gesamtheit die Gewähr, dass auf Grund der möglichen Winkelbeweglichkeit der Kolbenstange ein leichtes Ansprechen des Schwingungsdämpfersystems 2 gegeben ist. Darüber hinaus bildet die Luftfeder-Schwingungsdämpferbaueinheit mit ihren kompakten Abmaßen und ihrer konstruktionstechnisch übersichtlichen Gestaltung die Möglichkeit, im Kraftfahrzeugbereich vielfältig für unterschiedliche Anforderungen eingesetzt werden zu können.

### Bezugszeichenliste

- 1.: Luftfeder
- 2.: Schwingungsdämpfersystem
- 3.: Luftkammer
- 4.: Rollbalg
- 5.: karosserieseitige Baugruppe
- 6.: Zylinderrohr
- 7.: fahrwerkseitige Baugruppe
- 8.: Kolbenstange
- 9.: Kolben
- 10.: Verbindungselement
- 11.: Kugelgelenk
- 12.: Kugelgelenk
- 13.: Schwenklageranordnung
- 14.: Lagerinnenteil
- 15.: Lageraußenteil
- 16.: Durchgangsausnehmung
- 17.: Innenausnehmung
- 18.: Mittellängsachse
- 19.: Befestigungsebene
- 20.: Befestigungsebene
- 21.: Anschlagelement
- 22.: Anschlagplatte
- 23.: Schwenklageranordnung
- 24.: Befestigungselement
- 27.: Dichtungselement
- 28.: Nut
- 29.: Durchgreiföffnung
- 30.: Dichtungselement

## Patentansprüche

1. Luftfeder-Schwingungsdämpferbaueinheit (1) für die Abfederung von Rädern und Fahrwerksbauteilen von Kraftfahrzeugen mit einer variablen, durch einen Rollbalg (4) begrenzten Luftkammer (3), bei der der Rollbalg zwischen einer ersten, karosserieseitig festgelegten, mit einem Schwingungsdämpfersystem versehenen Baugruppe und einer zweiten, am Fahrwerk des Kraftfahrzeuges festgelegten und mit diesem beweglichen Baugruppe angeordnet ist, und mit einer die erste karosserieseitige Baugruppe (5) und die zweite fahrwerkseitige Baugruppe (7) verbindenden Kolbenstange, welche an ihrem karosserieseitigen freien Ende mittels eines Kolbens längsverschieblich im Innenraum eines Zylinderrohres (6) des Schwingungsdämpfersystems aufgenommen ist,
**dadurch gekennzeichnet, dass**
die Kolbenstange (8) innerhalb des Zylinderrohres (6) des Schwingungsdämpfersystems (2) längsverschieblich in einer Schwenklageranordnung (13) geführt ist, welche Winkelausschläge der Kolbenstangenlängsachse zur Mittellängsachse (18) des Zylinderrohres (6) ermöglicht, und dass zwischen Kolbenstange (8) und Kolben (9) ein Verbindungselement (10) angeordnet ist, welches an Kolbenstange (8) und Kolben (9) mittels jeweils eines Kugelgelenkes (11, 12) festgelegt ist.

2. Luftfeder-Schwingungsdämpferbaueinheit nach Anspruch 1,
**dadurch gekennzeichnet, dass**
die Schwenklageranordnung (13) ein mit einer dem Kolbenstangenquerschnitt angepassten Durchgangsausnehmung (16) versehenes Lagerinnenteil (14) mit runder, im Querschnitt variierender Außenkontur in Form einer konvexen Außengestalt aufweist, welches von einem Lageraußenteil (15) mit an die Außenkontur des Lagerinnenteils (14) angepasster, korrespondierender konkaver Innenausnehmung (17) umschlossen ist.

3. Luftfeder-Schwingungsdämpferbaueinheit nach Anspruch 2,
**dadurch gekennzeichnet, dass**
in der Durchgangsausnehmung(16) des Lagerinnenteils (14) zur Führung der Kolbenstange (8) mindestens ein Dichtungselement angeordnet ist.

4. Luftfeder-Schwingungsdampferbaueinheit nach Anspruch 3,
**dadurch gekennzeichnet, dass**
in zwei umlaufenden, nutenförmigen Vertiefungen an der inneren Führungsfläche der Durchgangsausnehmung (16) elastische Dichtungsringe angeordnet sind.

5. Luftfeder-Schwingungsdämpferbaueinheit nach Anspruch 2,
**dadurch gekennzeichnet, dass**
zwischen Lagerinnenteil (14) und Lageraußenteil (15) der Schwenklageranordnung (13) mindestens ein Dichtungselement (27) angeordnet ist.

6. Luftfeder-Schwingungsdämpferbaueinheit nach Anspruch 5,
**dadurch gekennzeichnet, dass**
das Dichtungselement (27) als elastischer Dichtungsring ausgebildet ist, welcher in einer umlaufenden Nut (28) an der inneren Führungsfläche der konkaven Innenausnehmung (17) des Lageraußenteils (15) angeordnet ist.

7. Luftfeder-Schwingungsdämpferbaueinheit nach einem der Ansprüche 1 bis 6,
**dadurch gekennzeichnet, dass**
an dem der Luftkammer (3) zugewandten Ende des Zylinderrohres (6) des Schwingungsdämpfersystems (2) die Durchgreiföffnung (29) für die Kolbenstange (8) mit einem Dichtungselement (30) mit elastischen Dichtlippen versehen ist, wobei die elastischen Dichtlippen als umlaufende Anlageelemente an die Kolbenstangenoberfläche der Schwenkbewegung der Kolbenstange (8) aus der Mittellängsachse (18) des Zylinderrohres (6) folgen können.

8. Luftfeder-Schwingungsdämpferbaueinheit nach einem der Ansprüche 1 bis 7,
**dadurch gekennzeichnet, dass**
das Lagerinnenteil (14) der Schwenklageranordnung (13) aus Kunststoff gefertigt ist.

9. Luftfeder-Schwingungsdämpferbaueinheit nach einem der Ansprüche 1 bis 8,
**dadurch gekennzeichnet, dass**
die Kolbenstange (8) an der zweiten, fahrwerkseitigen Baugruppe (7) in einer weiteren Schwenklageranordnung (13) aufgenommen ist, welche kleine Winkelabweichungen der Kolbenstangenmittelachse (18) senkrecht zur Befestigungsebene (19, 20) der fahrwerkseitigen Baugruppe (7) ermöglicht.

10. Luftfeder-Schwingungsdämpferbaueinheit nach Anspruch 9,
**dadurch gekennzeichnet, dass**
die Schwenklageranordnung (13) als Kugelhülsengelenk ausgebildet ist.

11. Luftfeder-Schwingungsdämpferbaueinheit nach einem der Ansprüche 1 bis 10,
**dadurch gekennzeichnet, dass**
der Querschnitt des Zylinderrohres (6) mit dem darin befindlichen Kolben (9) mindestens in einem Teilbereich der Längserstreckung des Zylinderrohres (6) ellipsenförmig gestaltet ist.

12. Luftfeder-Schwingungsdämpferbaueinheit nach Anspruch 11,
**dadurch gekennzeichnet, dass**
Zylinderrohr (6), Kolben (9) und die Schwenklageranordnung (13) im Querschnitt ellipsenförmig ausgebildet sind.

## Claims

1. Pneumatic spring-vibration damper unit (1) for the suspension of wheels and chassis components of motor vehicles, having a variable air chamber (3) delimited by rolled bellows (4), the rolled bellows being arranged between a first assembly, which is fixed on the body side and is provided with a vibration damper system, and a second assembly, which is fixed to the chassis of the motor vehicle and is able to move together with same, and having a piston rod, which connects the first, body-side assembly (5) and the second, chassis-side assembly (7), and which is accommodated at its body-side free end by means of a piston in the interior space of a cylinder tube (6) of the vibration damper system in a longitudinally displaceable manner,
**characterised in that**
the piston rod (8) is guided longitudinally displaceably within the cylinder tube (6) of the vibration damper system (2) in a pivot bearing arrangement (13), which makes possible angular deflections of the longitudinal axis of the piston rod in relation to the central longitudinal axis (18) of the cylinder tube (6), and **in that** a connecting element (10), fixed to the piston rod (8) and to the piston (9) by means of a ball-and-socket joint (11, 12) in each case, is arranged between the piston rod (8) and the piston (9).

2. Pneumatic spring-vibration damper unit according to Claim 1,
**characterised in that**
the pivot bearing arrangement (13) has a bearing inner part (14), which is provided with a through-opening (16) adapted to the cross-section of the piston rod and has a round outer contour with varying cross-section in the form of a convex outer shape, the bearing inner part being surrounded by a bearing outer part (15) with a corresponding concave inner recess (17) adapted to the outer contour of the bearing inner part (14).

3. Pneumatic spring-vibration damper unit according to Claim 2,
**characterised in that**
at least one sealing element is arranged in the through-opening (16) of the bearing inner part (14) for guiding the piston rod (8).

4. Pneumatic spring-vibration damper unit according to Claim 3,
**characterised in that**
elastic sealing rings are arranged in two circumferential, groove-shaped depressions at the inner guide surface of the through-opening (16).

5. Pneumatic spring-vibration damper unit according to Claim 2,
**characterised in that**
at least one sealing element (27) is arranged between the bearing inner part (14) and the bearing outer part (15) of the pivot bearing arrangement (13).

6. Pneumatic spring-vibration damper unit according to Claim 5,
**characterised in that**
the sealing element (27) is designed as an elastic sealing ring, which is arranged in a circumferential groove (28) at the inner guide surface of the concave inner recess (17) of the bearing outer part (15).

7. Pneumatic spring-vibration damper unit according to one of Claims 1 to 6,
**characterised in that**
at that end of the cylinder tube (6) of the vibration damper system (2) which faces the air chamber (3), the reach-through opening (29) for the piston rod (8) is provided with a sealing element (30) with elastic sealing lips, the elastic sealing lips being able to follow the pivoting movement of the piston rod (8) from the central longitudinal axis (18) of the cylinder tube (6) as circumferential contact elements in contact with the surface of the piston rod.

8. Pneumatic spring-vibration damper unit according to one of Claims 1 to 7,
**characterised in that**
the bearing inner part (14) of the pivot bearing arrangement (13) is made from plastic.

9. Pneumatic spring-vibration damper unit according to one of Claims 1 to 8,
**characterised in that**
the piston rod (8) is accommodated at the second, chassis-side assembly (7) in a further pivot bearing arrangement (13), which makes possible small angular deviations of the central axis (18) of the piston rod perpendicularly to the plane of fastening (19, 20) of the chassis-side assembly (7).

10. Pneumatic spring-vibration damper unit according to Claim 9,
**characterised in that**
the pivot bearing arrangement (13) is designed as a ball sleeve joint.

11. Pneumatic spring-vibration damper unit according to one of Claims 1 to 10,
**characterised in that**
the cross-section of the cylinder tube (6) with the piston (9) located therein has an elliptical shape at least in a partial area of the longitudinal extent of the cylinder tube (6).

12. Pneumatic spring-vibration damper unit according to Claim 11,
**characterised in that**
the cylinder tube (6), the piston (9) and the pivot bearing arrangement (13) have an elliptical cross-section.

## Revendications

1. Module amortisseur d'oscillations pneumatique (1) pour la suspension de roues et de pièces de châssis de véhicules automobiles, comprenant une chambre d'air (3) variable délimitée par un soufflet roulant (4), dans laquelle chambre le soufflet roulant est agencé entre un premier module fixé du côté carrosserie et pourvu d'un système amortisseur d'oscillations et un deuxième module fixé sur le châssis du véhicule et mobile avec celui-ci, et une tige de piston raccordant le premier module du côté carrosserie (5) et le deuxième module du côté châssis (7), tige de piston qui est logée, à son extrémité libre du côté carrosserie, à l'aide d'un piston de manière à pouvoir se déplacer en longueur dans l'espace intérieur d'un tube cylindrique (6) du système amortisseur d'oscillations,
**caractérisé en ce que**
la tige de piston (8) est guidée à l'intérieur du tube cylindrique (6) du système amortisseur d'oscillations (2) de manière à pouvoir se déplacer en longueur dans un agencement de palier pivotant (13), qui permet des déplacements angulaires de l'axe longitudinal de la tige de piston par rapport à l'axe médian longitudinal (18) du tube cylindrique (6), et **en ce qu'**un élément de raccordement (10) est agencé entre la tige de piston (8) et le piston (9), élément qui est fixé sur la tige de piston (8) et le piston (9) au moyen respectivement d'un joint à rotule (11, 12).

2. Module amortisseur d'oscillations pneumatique selon la revendication 1, **caractérisé en ce que** l'agencement de palier pivotant (13) présente une partie (14) interne au palier et pourvue d'un évidement de passage (16) adapté à la section transversale de la tige de piston avec un contour externe rond de section transversale variable ayant une forme externe convexe, qui est entourée d'une partie (15) externe au palier avec un évidement interne concave correspondant (17) adapté au contour externe de la partie (14) interne au palier.

3. Module amortisseur d'oscillations pneumatique selon la revendication 2, **caractérisé en ce qu'**au moins un élément d'étanchéité est agencé dans l'évidement de passage (16) de la partie (14) interne au palier pour guider la tige de piston (8).

4. Module amortisseur d'oscillations pneumatique selon la revendication 2, **caractérisé en ce que** des bagues d'étanchéité élastiques sont agencées dans deux renfoncements périphériques en forme de rainures sur la surface de guidage interne de l'évidement de passage (16).

5. Module amortisseur d'oscillations pneumatique selon la revendication 2, **caractérisé en ce qu'**au moins un élément d'étanchéité (27) est agencé entre la partie (14) interne au palier et la partie (15) externe au palier de l'agencement de palier pivotant (13).

6. Module amortisseur d'oscillations pneumatique selon la revendication 5, **caractérisé en ce que** l'élément d'étanchéité (27) se présente sous la forme d'une bague d'étanchéité élastique qui est agencée dans une rainure périphérique (28) sur la surface de guidage interne de l'évidement interne concave (17) de la partie (15) externe au palier.

7. Module amortisseur d'oscillations pneumatique selon l'une quelconque des revendications 1 à 6, **caractérisé en ce que**, à l'extrémité du tube cylindrique (6) du système amortisseur d'oscillations (2) tournée vers la chambre d'air (3), l'ouverture de pénétration (29) pour la tige de piston (8) est pourvue d'un élément d'étanchéité (30) avec des lèvres d'étanchéité élastiques, dans lequel les lèvres d'étanchéité élastiques peuvent, comme éléments d'appui périphériques sur la surface de la tige de piston, suivre le mouvement pivotant de la tige de piston (8) depuis l'axe longitudinal médian (18) du tube cylindrique (6).

8. Module amortisseur d'oscillations pneumatique selon l'une quelconque des revendications 1 à 7, **caractérisé en ce que** la partie (14) interne au palier de l'agencement de palier pivotant (13) est fabriquée en matériau synthétique.

9. Module amortisseur d'oscillations pneumatique selon l'une quelconque des revendications 1 à 8, **caractérisé en ce que** la tige de piston (8) est logée sur le deuxième module (7) du côté châssis dans un autre agencement de palier pivotant (13) qui permet de petits écarts angulaires de l'axe médian (18) de la tige de piston perpendiculairement au plan de fixation (19, 20) du module du côté châssis (7).

10. Module amortisseur d'oscillations pneumatique selon la revendication 9, **caractérisé en ce que** l'agencement de palier pivotant (13) se présente sous la forme d'un joint à rotule à manchon.

11. Module amortisseur d'oscillations pneumatique selon l'une quelconque des revendications 1 à 10, **caractérisé en ce que** la section transversale du tube cylindrique (6) avec le piston (9) qui se trouve à l'intérieur présente, au moins dans une zone partielle de l'extension longitudinale du tube cylindrique (6), une forme elliptique.

12. Module amortisseur d'oscillations pneumatique selon la revendication 11, **caractérisé en ce que** le tube cylindrique (6), le piston (9) et l'agencement de palier pivotant (13) présentent une section transversale de forme elliptique.
